# EUROPÄISCHE PATENTANMELDUNG

(11) **EP 1 209 584 A2**
(43) Veröffentlichungstag der Anmeldung: **29.05.2002**
(21) Anmeldenummer: 01125068.5
(22) Anmeldetag: 22.10.2001
(51) Int. Cl.: G06F 17/30

(54) **Einheit zur Verwaltung von in einer Datenverarbeitungseinrichtung gespeicherten Daten**

(30) Priorität: 28.11.2000 DE 10059103
(71) Anmelder: SIEMENS AKTIENGESELLSCHAFT, 80333 München (DE)
(72) Erfinder: Berndt, Stefan, 59427 Unna-Hemmere (DE)

(57) **Zusammenfassung**

Die Einheit (AE) umfaßt eine erste Schnittstelle zu einen Zugriff auf die Daten initialisierenden Applikationen (S-A, C-A) und eine zweite Schnittstelle zu einer Zugriffsmechanismen für unterschiedliche Speicherstrukturen bereitstellenden Zugriffseinheit, wobei die Einheit (AE) den Applikationen (S-A, C-A) die entsprechenden Daten unter Zugriff auf die Zugriffseinheit zur Verfügung stellt. Die Applikationen (S-A, C-A) sind vorzugsweise objektorientiert realisiert, wobei die Daten der Applikation (S-A, C-A) durch die Einheit (AE) bereits in Form von benötigten Objekten zur Verfügung gestellt werden.

## Beschreibung

Für eine ordnungsgemäße Funktion von auf einer Datenverarbeitungseinrichtung ablaufenden Softwaremodulen bzw. Applikationen benötigen diese modul- bzw. applikationsspezifische Daten, z.B. sogenannte Konfigurations- und Metadaten. Diese Konfigurations- und Metadaten werden in der Regel in unterschiedlichen Speichermedien, z.B. einer relationalen Datenbank oder einem Verzeichnis - in der Literatur häufig als Directory bezeichnet - abgespeichert und sind infolge dessen in verschiedenen Speicherstrukturen abgelegt.

Bei modernen Softwaremodulen bzw. Applikationen handelt es sich häufig um objektorientierte - beispielsweise in der bekannten Programmiersprache C++ programmierte - Realisierungen, deren Daten in die unterschiedlichen Speichermedien serialisiert werden müssen, d.h. Objekte und Attribute der objektorientierten Daten müssen für eine Speicherung in einem Speichermedium entsprechend umgesetzt werden. Hierfür benötigen die einzelnen Softwaremodule bzw. Applikationen jeweils Informationen über das Speichermedium in dem die entsprechenden Daten gespeichert werden sollen, Informationen über die Speicherstruktur des jeweiligen Speichermediums - in der Literatur häufig als Metadaten bezeichnet - und zusätzlich die notwendigen Mechanismen für einen entsprechenden Speicherzugriff.

Die Ausgestaltung der einzelnen Softwaremodule bzw. Applikationen mit den entsprechenden Informationen und Mechanismen ist jedoch mit einem hohen Aufwand verbunden, wodurch sich eine Änderung dieser Softwaremodule bzw. Applikationen schwierig gestaltet.

Der vorliegenden Erfindung liegt daher die Aufgabe zugrunde, Maßnahmen anzugeben, durch welche ein Speicherzugriff ausgehend von einer Applikation auf in einem Speichermedium gespeicherte Daten vereinfacht werden kann.

Die Lösung dieser Aufgabe erfolgt erfindungsgemäß mit den Merkmalen des Patentanspruchs 1.

Ein wesentlicher Vorteil der erfindungsgemäßen Einheit besteht darin, daß durch das Einrichten einer Zwischenschicht zwischen Applikation und Speichereinheit die Applikation keine Informationen mehr über den Speicherort und die Speicherstruktur benötigt und somit eine Realisierung von Applikationen vereinfacht werden kann. Zusätzlich lassen sich auf einfache Weise verschiedene Speichermedien miteinander kombinieren und somit gegenüber einer Applikation als ein großes zusammenhängendes Speichermedium darstellen.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch das Vorsehen eines Konsistenzmoduls bei einer Änderung von Daten automatisch von diesen geänderten Daten abhängige Daten ebenfalls geändert werden und weitere Applikationen die parallel auf die geänderten Daten zugreifen - in der Literatur häufig als Mehrfachzugriff bezeichnet - über die Änderung informiert werden.

Ein weiterer Vorteil von Ausgestaltungen der Erfindung besteht darin, daß bei einer objektorientierten Realisierung von Applikationen einer Applikation die Daten bereits in Form von benötigten Objekten zur Verfügung gestellt werden und somit eine Serialisierung bzw. Deserialisierung der Daten bei einem Speicherzugriff entfallen kann.

Des weiteren vereinfacht das Vorsehen einer derartigen Zwischenschicht einen Wechsel von einer herkömmlichen zu einer objektorientierten Speicherstruktur, z.B. einer objektorientierten Datenbank.

Ein Ausführungsbeispiel der Erfindung wird im folgenden anhand der Zeichnung näher erläutert.

Dabei zeigen:
- Fig. 1:: ein Strukturbild zur schematischen Darstellung der an der Erfindung beteiligten wesentlichen Funktionseinheiten; und
- Fig. 2:: ein Ablaufdiagramm zur Veranschaulichung der bei einer Änderung von Daten in einer Datenbasis ablaufenden wesentlichen Verfahrensschritte.

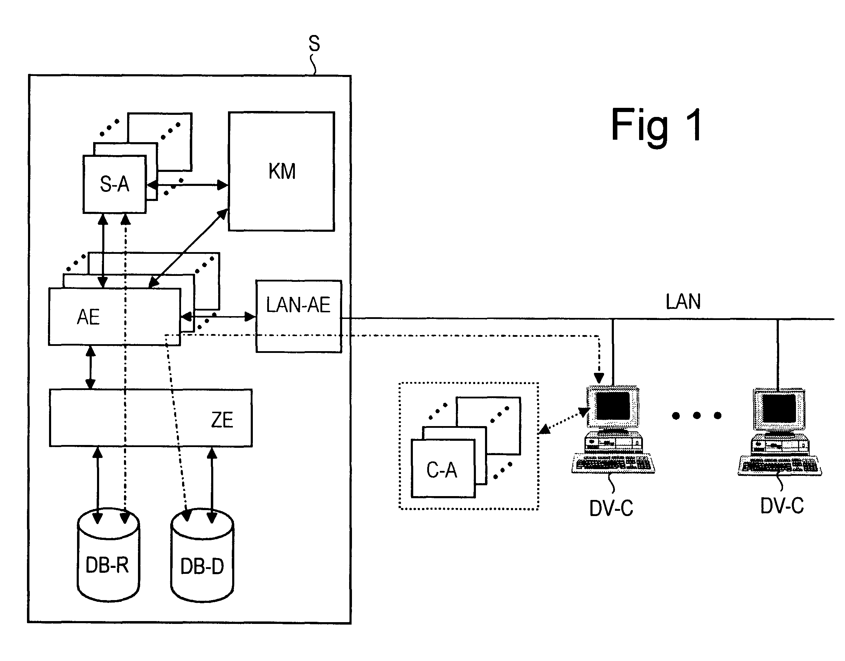

Fig. 1 zeigt eine sogenannte Client-Server-Architektur mit einer zentralen Datenverarbeitungseinrichtung S - in der Literatur als Server bezeichnet - und einer Mehrzahl von lokalen Datenverarbeitungseinrichtungen DV-C - in der Literatur als Clients bezeichnet. Die zentrale Datenverarbeitungseinrichtung S und die lokalen Datenverarbeitungseinrichtungen DV-C sind über ein lokales Netzwerk LAN miteinander verbunden.

Auf den lokalen Datenverarbeitungseinrichtungen DV-C laufen lokale Applikationen C-A - durch den gestrichelten Kasten für eine der lokalen Datenverarbeitungseinrichtungen DV-C schematisch dargestellt - ab. Des weiteren laufen auf der zentralen Datenverarbeitungseinrichtung S zentrale Applikationen S-A ab. Im vorliegenden Ausführungsbeispiel handelt es sich bei den Applikationen C-A, S-A um objektorientiert realisierte Applikationen, d.h. um in einer objektorientierten Programmiersprache (z.B. in der bekannten Programmiersprache C++) erstellte Applikationen.

Für einen ordnungsgemäßen Ablauf der Applikationen C-A, S-A ist ein Zugriff der Applikationen C-A, S-A auf in Datenbasen der zentralen Datenverarbeitungseinrichtung S gespeicherte Daten - durch die Strich-Punkt-Linien schematisch angedeutet - notwendig. Beispielhaft sind eine erste Datenbasis DB-R, beispielsweise eine relationale Datenbank, und eine zweite Datenbasis DB-D, beispielsweise ein Verzeichnis (in der Literatur auch als Directory bezeichnet), dargestellt. Die Datenbasen DB-R, DB-D weisen unterschiedliche Speicherstrukturen auf, so daß für einen Zugriff auf die Datenbasen DB-R, DB-D unterschiedliche Zugriffsmechanismen notwendig sind.

Eine Steuerung des Zugriffs der Applikationen C-A, S-A auf die Datenbasen DB-R, DB-D erfolgt durch eine erfindungsgemäße Abstraktionseinheit AE, die drei Schnittstellen für eine Verbindung mit den hierfür notwendigen Einheiten der zentralen und lokalen Datenverarbeitungseinrichtungen S, DV-C aufweist. Hierbei ist jeder auf der zentralen Datenverarbeitungseinrichtung S ablaufenden zentralen Applikation S-A und jeder auf den lokalen Datenverarbeitungseinrichtungen DV-C ablaufenden lokalen Applikationen C-A jeweils eine applikationsspezifische Abstraktionseinheit AE zugeordnet.

Hierbei erfolgt über eine erste Schnittstelle eine Verbindung der Abstraktionseinheit AE mit den einen Speicherzugriff ausführenden Applikationen C-A, S-A. Eine Verbindung der Applikationen C-A, S-A mit der Abstraktionseinheit AE kann dabei - bei auf der zentralen Datenverarbeitungseinrichtung S ablaufenden zentralen Applikationen S-A - direkt oder - bei auf den lokalen Datenverarbeitungseinrichtungen DV-C ablaufenden lokalen Applikationen C-A - über eine in der zentralen Datenverarbeitungseinrichtung S angeordnete Netz-Anschlußeinheit LAN-AE und das lokale Netzwerk LAN erfolgen. Über eine zweite Schnittstelle erfolgt eine Verbindung der Abstraktionseinheit AE mit einer Zugriffsmechanismen für die unterschiedlichen Datenbasen DB-R, DB-D bereitstellenden Zugriffseinheit ZE. Über eine dritte Schnittstelle wird eine Verbindung zu einem sogenannten Konsistenzmodul KM hergestellt, wobei durch das Konsistenzmodul KM eine automatische Benachrichtigung über und eine Aktualisierung der geänderten Daten für parallel auf die geänderten Daten zugreifende weitere Applikationen S-A, C-A realisiert wird.

Durch die Abstraktionseinheiten AE werden in eine der Datenbasen DB-R, DB-D einzuschreibende, in Form von Objekten von einer Applikation S-A, C-A an die Abstraktionseinheit AE übergebene Daten entsprechend umgewandelt, d.h. serialisiert und in die entsprechende Datenbasis DB-R, DB-D eingeschrieben. Analog hierzu werden durch die Abstraktionseinheit AE aus den Datenbasen DB-R, DB-D auszulesende Daten entsprechend deserialisiert, d.h. in benötigte Objekte umgewandelt und an die entsprechende die Daten anfordernde Applikation S-A, C-A übermittelt.

Insbesondere bei verteilten, d.h. netzweiten Systemen eignet sich die Implementierung einer derartigen Abstraktionseinheit AE bei Softwarerealisierungen gemäß der sogenannten "3-Tier-Architektur". Gemäß der "3-Tier-Architektur" besteht eine Trennung zwischen einem sogenannten "Presentation-Tier", in diesem Fall einer Applikation S-A, C-A, einem sogenannten "Business-Tier", in diesem Fall mit der Abstraktionseinheit AE vergleichbar, und einem sogenannten "Data-Tier", in diesem Fall einer Datenbasis DB-R, DB-D. Bei der "3-Tier-Architektur" ist es üblich in den "Presentation-Tier" Informationen über die Art der zugeordneten Datenbasis DB-R, DB-D und die Struktur der gespeicherten Daten zu implementieren, wodurch Änderungen am "Presentation-Tier" mit einem hohen Aufwand verbunden sind. Dieser Nachteil kann durch eine erfindungsgemäße Abstraktionseinheit AE behoben werden. Eine Realisierung einer derartigen "3-Tier-Architektur" erfolgt beispielsweise unter Verwendung von Komponententechniken, z.B. COM/DCOM der Firma Microsoft oder CORBA. Insbesondere bei lokalen Realisierungen kann die Implementierung einer Abstraktionseinheit AE jedoch auch bei Lösungen gemäß einem Bibliotheksansatz, z.B. DLL, realisiert werden.

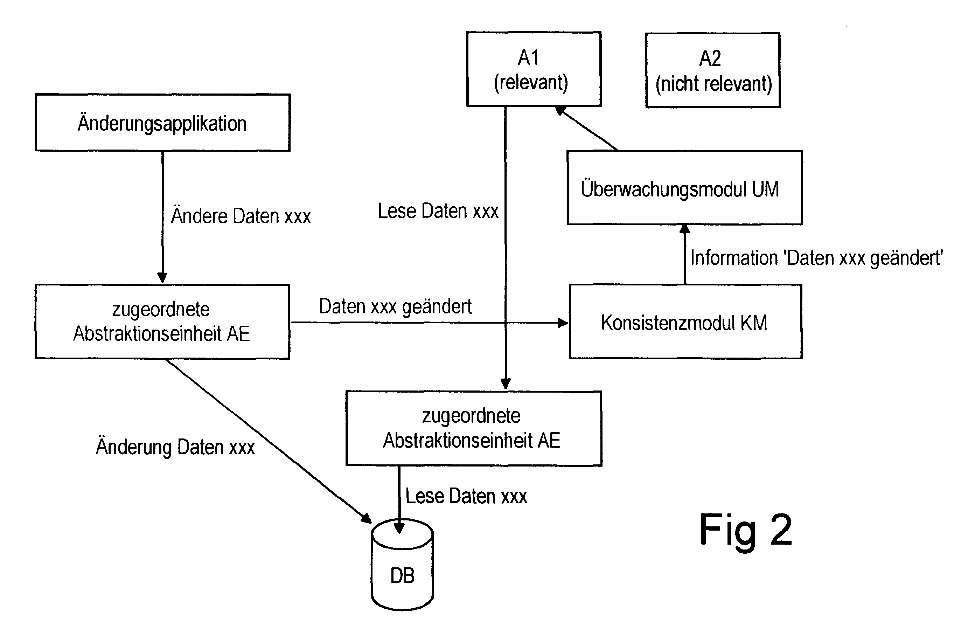

Fig. 2 zeigt ein Ablaufdiagramm zur Veranschaulichung der bei einer Änderung von Daten in einer Datenbasis DB ablaufenden wesentlichen Verfahrensschritte. Wird ausgehend von einer Änderungsapplikation eine Meldung "Ändere Daten xxx" an eine der Änderungsapplikation zugeordnete Abstraktionseinheit AE übermittelt, veranlaßt diese Abstraktionseinheit AE über die zweite Schnittstelle unter Zugriff auf die Zugriffseinheit ZE die Änderung der Daten xxx in der entsprechenden Datenbasis DB. Gleichzeitig bzw. nach der erfolgten Änderung der Daten xxx übermittelt diese Abstraktionseinheit AE über die dritte Schnittstelle eine Meldung "Daten xxx geändert" an das Konsistenzmodul KM.

Das Konsistenzmodul KM übermittelt wiederum eine Information darüber, daß die Daten xxx geändert wurden an ein zugeordnetes Überwachungsmodul UM. Im Überwachungsmodul UM ist eine Information darüber gespeichert, auf welche Applikationen A1, A2 eine Änderung der Daten Auswirkungen hat, d.h. welche der Applikationen A1, A2 parallel auf die geänderten Daten xxx zugreifen. Im vorliegenden Ausführungsbeispiel sind zwei Applikationen A1, A2 dargestellt, wobei die Änderung der Daten xxx für eine erste Applikation A1 relevant und für eine zweite Applikation A2 nicht relevant ist.

In einem nächsten Schritt übermittelt das Überwachungsmodul UM eine Meldung über die Änderung der Daten xxx an die erste Applikation A1, die daraufhin eine Meldung "Lese Daten xxx" an eine der ersten Applikation A1 zugeordnete Abstraktionseinheit AE übermittelt. Infolge des Empfangs dieser Meldung veranlaßt die Abstraktionseinheit AE über die zweite Schnittstelle unter Zugriff auf die Zugriffseinheit ZE einen Lesezugriff auf die Daten xxx in der entsprechenden Datenbasis DB und übermittelt die neuen Daten xxx über die erste Schnittstelle an die erste Applikation A1. Durch das beschriebene Verfahren wird auf einfache Weise eine Benachrichtigung über und eine Aktualisierung der geänderten Daten xxx für eine Vielzahl von Applikationen auch über verschiedene Speichermedien hinweg erreicht.

## Patentansprüche

1. Einheit (AE) zur Verwaltung von in einer Datenverarbeitungseinrichtung (S) gespeicherten Daten,
- mit einer ersten Schnittstelle zu einer einen Zugriff auf die Daten initialisierenden Applikation (S-A, C-A),
- mit einer zweiten Schnittstelle zu einer Zugriffsmechanismen für unterschiedliche Speicherstrukturen bereitstellenden Zugriffseinheit,
wobei die Einheit (AE) der Applikation (S-A, C-A) die entsprechenden Daten unter Zugriff auf die Zugriffseinheit zur Verfügung stellt.

2. Einheit (AE) gemäß Anspruch 1,
**dadurch gekennzeichnet,**
**daß** die Applikation (S-A, C-A) objektorientiert realisiert ist und die Daten in Form von benötigten Objekten zur Verfügung stellt werden.

3. Einheit (AE) gemäß Anspruch 1 oder 2,
**gekennzeichnet durch,**
eine dritte Schnittstelle zu einem Konsistenzmodul (KM) zur automatischen Aktualisierung von geänderten Daten bei auf die gleichen Daten zugreifenden weiteren Applikationen (S-A, C-A).

4. Einheit (AE) gemäß Anspruch 1, 2 oder 3,
**dadurch gekennzeichnet,**
**daß** die Applikation (S-A) auf der gleichen Datenverarbeitungseinrichtung (S) abläuft, in der die Daten gespeichert sind.

5. Einheit (AE) gemäß Anspruch 1, 2 oder 3,
**dadurch gekennzeichnet,**
**daß** die Applikation (C-A) auf einer ersten Datenverarbeitungseinrichtung (DV-C) abläuft und die Daten in einer zweiten Datenverarbeitungseinrichtung (S) gespeichert sind, wobei die erste und die zweite Datenverarbeitungseinrichtung (DV-C, S) über ein Netzwerk (LAN) miteinander verbunden sind.

6. Einheit (AE) gemäß Anspruch 5,
**dadurch gekennzeichnet,**
**daß** die Einheit (AE) in der zweiten Datenverarbeitungseinrichtung (S) angeordnet ist.

7. Einheit (AE) gemäß Anspruch 5 oder 6,
**dadurch gekennzeichnet,**
**daß** über die erste Schnittstelle eine Verbindung mit einer Netz-Anschlußeinheit (LAN-AE) erfolgt.

8. Einheit (AE) nach einem der vorhergehenden Ansprüche,
**dadurch gekennzeichnet,**
**daß** bei mehreren Applikationen (S-A, C-A) jeder Applikation (S-A, C-A) jeweils eine applikations-spezifische Einheit (AE) zugeordnet ist.
